(19) Europäisches Patentamt
European Patent Office
Office européen des brevets

(11) Veröffentlichungsnummer: **0 012 283**
**B1**

(12) **EUROPÄISCHE PATENTSCHRIFT**

(45) Veröffentlichungstag der Patentschrift: **23.09.81**

(21) Anmeldenummer: **79104781.4**

(22) Anmeldetag: **30.11.79**

(51) Int. Cl.³: **C 09 B 11/18**, C 09 B 11/26, C 09 B 11/02 // C07C87/62, C07C91/40, C07D209/04, C07D295/00

(54) **Verfahren zur Herstellung basischer Farbstoffe.**

(30) Priorität: **13.12.78 DE 2853822**

(43) Veröffentlichungstag der Anmeldung: **25.06.80 Patentblatt 80/13**

(45) Bekanntmachung des Hinweises auf die Patenterteilung: **23.09.81 Patentblatt 81/38**

(84) Benannte Vertragsstaaten: **BE CH DE FR GB IT**

(56) Entgegenhaltungen:
**DE-A-2 334 918**
**DE-A-2 152 703**
**DE-C-231 992**

(73) Patentinhaber: **BAYER AG, Zentralbereich Patente, Marken und Lizenzen, D-5090 Leverkusen 1, Bayerwerk (DE)**

(72) Erfinder: **Hermann, Karl Heinz, Dr., Walter-Flex-Strasse 20, D-5090 Leverkusen 1 (DE)**

EP 0 012 283 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Herstellung basischer Farbstoffe

Die Erfindung betrifft ein Verfahren zur Herstellung basischer Farbstoffe der allgemeinen Formel

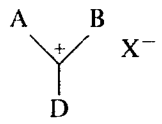

I

in der

A und B unabhängig voneinander für einen heteroaromatischen Rest oder einen Rest der allgemeinen Formel

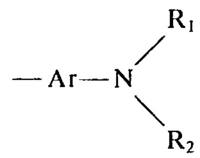

II

stehen, in der

Ar die Gruppierungen

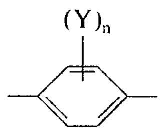

oder

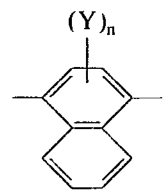

in denen

Y für Wasserstoff oder nichtionische Substituenten und
n für die Zahlen 1 bis 4 stehen, bedeutet und
$R_1$ und $R_2$ für Wasserstoff oder gegebenenfalls durch nichtionische oder saure Gruppen substituiertes Alkyl, Aryl, Cyclohexyl oder Aralkyl stehen oder zusammen oder mit der o-Position von Ar einen heterocyclischen Ring bilden, der durch $C_1-C_4$-Alkyl oder Phenyl substituiert sein kann,
D Wasserstsoff, Alkyl, gegebenenfalls mit neutralen oder sauren Gruppen substituiertes Aryl oder einen heteroaromatischen Rest bedeutet und
$X^-$ für ein Anion steht,

dadurch gekennzeichnet, daß man Verbindungen der allgemeinen Formel

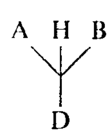

III

in der

A, B und D die oben genannte Bedeutung haben,

mit Sauerstoff in Gegenwart katalytischer Mengen von durch Halogen oder Cyan substituierten Benzochinonen oder durch Nitro substituierten Phenanthrenchinonen und in Gegenwart katalytischer Mengen von Stickstoffoxiden — ausgenommen Distickstoffmonoxid — der von Substanzen, die unter den Reaktionsbedingungen solche Stickstoffoxide erzeugen, oxidiert.

In den Formeln sind unter Alkylresten insbesondere $C_1-C_4$-Alkylreste zu verstehen. Die Alkylreste tragen beispielsweise 1—3 der nichtionischen oder sauren Substituenten. Als solche sind Halogen, Hydroxy, $C_1-C_4$-Alkyl, Cyan, $C_1-C_4$-Alkoxy, $C_1-C_4$-Alkoxycarbonyl, $C_1-C_3$-Alkylcarbonyloxy, Aminocarbonyl, Sulfo oder Carboxy zu nennen.

Unter Halogen ist vorzugsweise Fluor, Chlor oder Brom zu verstehen.

Geeignete Arylreste sind isbesondere ein gegebenenfalls substituierter Phenyl- oder Naphtylrest.

Geeignete Aralkylreste sind insbesondere ein gegebenenfalls substituierter Benzyl-, α- oder β-Phenyläthyl-, α-, β- oder γ-Phenylpropylrest.

Diese Isocyclen können beispielsweise 1—3 Substituenten wie Halogen, $C_1$—$C_4$-Alkyl, $C_1$—$C_4$-alkoxy, Sulfo oder Carboxyl tragen.

Die Reste $R_1$ und $R_2$ bilden zusammen oder mit der o-Position von Ar z. B. 5- oder 6gliedrige Ringe; zusammen bilden sie beispielsweise einen Piperidin-, Pyrrolidin-, Morpholin- oder Piperazin-Ring; mit der o-Position von Ar bilden sie zusammen beispielsweise einen Tetrahydrochinolin-, Indolin-, Julolidin-, Phenmorpholin-, Tetrahydrochinoxalin- oder Carbazol-Ring.

Als heteroaromatischen Ring D seien vor allem der Indolyl-3-, Pyrazolyl-4- und Pyrazolinon-5-yl-4-Ring genannt. Die heterocyclischen Ringe sind z. B. durch $C_1$—$C_4$-Alkyl-Gruppen oder Phenyl substituiert.

Unter den oben beschriebenen Farbstoffen lassen sich besonders solche der allgemeinen Formel IV gut darstellen,

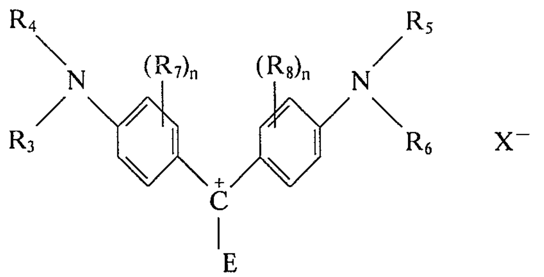

$X^-$ IV

in der unabhängig voneinander

$R_3$ und $R_5$ Wasserstoff, $C_1$—$C_4$-Alkyl, Hydroxyalkyl mit zwei und drei C-Atomen, Cyanäthyl, Alkoxyalkyl mit insgesamt drei bis fünf C-Atomen, Alkoxycarbonylalkyl mit insgesamt drei bis fünf C-Atomen, Alkoxycarbonylalkyl mit insgesamt drei bis acht C-Atomen, Alkylcarbonyloxyalkyl mit insgesamt drei bis acht C-Atomen, $C_1$- bis $C_4$-Halogenalkyl, Sulfoalkyl mit zwei bis vier C-Atomen, Cyclohexyl, Benzyl, Phenyl, Phenäthyl, durch Halogen, $C_1$- bis $C_4$-Alkyl oder -Alkoxy substituiertes Phenyl oder Sulfobenzyl,

$R_4$ und $R_6$ $C_1$- bis $C_4$-Alkyl, Hydroxyalkyl mit zwei oder drei C-Atomen, Cyanäthyl, $C_1$- bis $C_4$-Halogenalkyl, Alkoxyalkyl mit insgesamt drei bis fünf C-Atomen, Alkoxycarbonylalkyl mit insgesamt drei bis acht C-Atomen, Alkylcarbonyloxyalkyl mit insgesamt drei bis acht C-Atomen oder Benzyl

bedeuten, oder

$R_3$ und $R_4$ und/oder $R_5$ und $R_6$ zusammen einen gegebenenfalls durch $C_1$—$C_4$-Alkyl substituierten Pyrrolidin-, Piperidin-, Morpholin- oder Piperazin-Ring oder

$R_3$, $R_4$, $R_5$ und/oder $R_6$ mit der o-Position des Phenylringes verbunden sind und dann mit dem Phenylring zusammen einen gegebenenfalls durch $C_1$—$C_4$-Alkyl, Phenyl oder Benzyl substituierten Tetrahydrochinolin-, Indolin-, Julolidin-, Phenmorpholin-, Tetrahydrochinoxalin- oder Carbazol-Ring bilden,

$R_7$ und $R_8$ für Wasserstoff, $C_1$- bis $C_4$-Alkyl, $C_1$- bis $C_4$-Alkoxy, Carbonsäure oder Halogen stehen,

n eine ganze Zahl zwischen 1 und 4 bedeutet und

E Phenyl, durch Halogen, $C_1$- bis $C_4$-Alkyl, $C_1$- bis $C_4$-Alkoxy, Nitro, die Carboxyl- oder Sulfonsäuregruppe mono- oder di-substituiertes Phenyl oder Naphthyl, einen heterocyclischen Rest der allgemeinen Formel

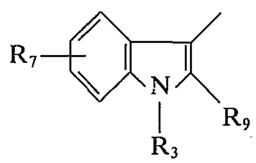

V

in der

$R_9$ H, $C_1$—$C_4$-Alkyl, Phenyl, Carbonsäure-$C_1$- oder $C_2$-alkylester, gegebenenfalls durch $C_1$—$C_4$-Alkyl N-substituiertes Carbonsäureamid oder $C_1$—$C_4$-Alkoxy bedeuten,

einen Rest der allgemeinen Formeln

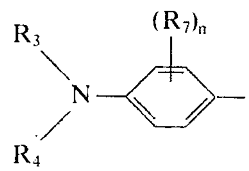

VI

und

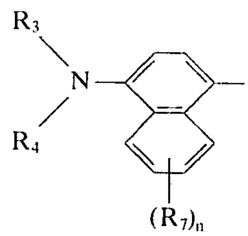

VII

in denen

n, $R_3$, $R_4$ und $R_7$ die oben genannte Bedeutung haben,

oder einen Rest der allgemeinen Formeln

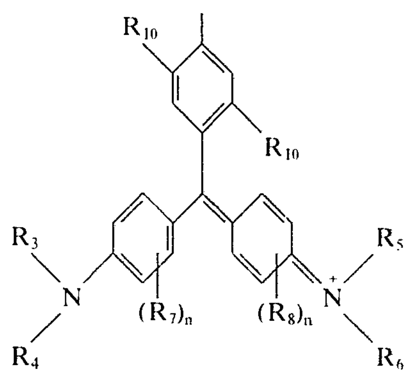

VIII

und

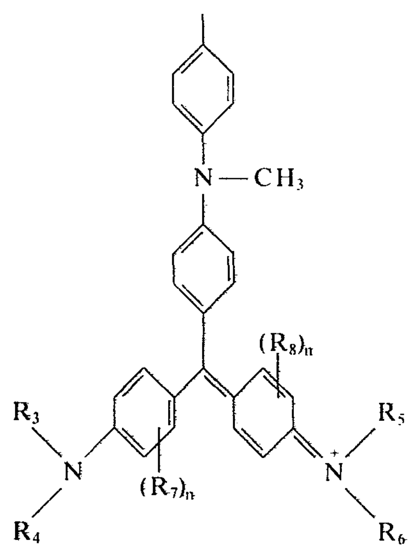

IX

in denen

$R_{10}$ Wasserstoff, $C_1-C_4$-Alkyl oder Halogen, insbesondere Chlor oder Brom, und
n, $R_3$, $R_4$, $R_5$, $R_6$, $R_7$ und $R_8$ die obengenannte Bedeutung haben, und
X für ein Anion

steht.

Als Ausgangsmaterialien zur Darstellung der Farbstoffe der allgemeinen Formel IV verwendet man Verbindungen der allgemeinen Formel

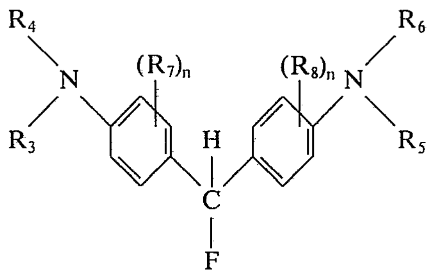

X

in der

n und $R_3$ bis $R_8$ die oben genannte Bedeutung haben und

F gleich E ist oder ein Rest der allgemeinen Formeln

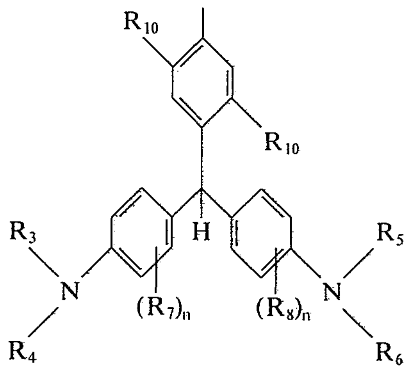

XI

und

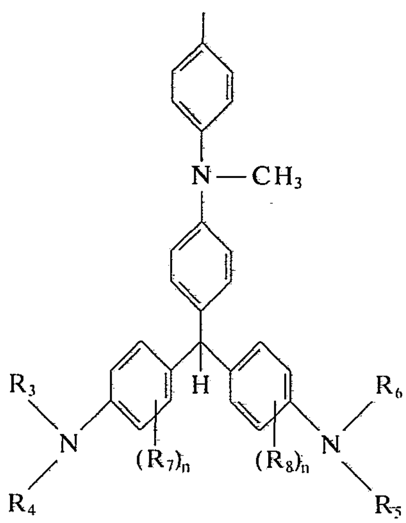

XII

in denen

n, $R_3$ bis $R_8$ und $R_{10}$ die oben genannte Bedeutung haben.

Besonders bevorzugt sind solche Farbstoffe der allgemeinen Formel IV, in der unabhängig voneinander

$R_3$ und $R_5$ für Wasserstoff, Methyl, Äthyl, Oxäthyl, Propyl oder Butyl,
$R_4$ und $R_6$ für Methyl, Äthyl, Sulfobenzyl oder Sulfoäthyl,

$R_7$ und $R_8$ für Wasserstoff, Methyl, Methoxy oder Chlor,
E für Phenyl, durch Chlor, Methoxy oder die Sulfonsäuregruppe substituiertes Phenyl, p-Dimethylaminophenyl, p-Diäthylaminophenyl, p-Bisoxäthylaminophenyl oder den Rest der allgemeinen Formel V mit
$R_9$ für Wasserstoff, Methyl oder Phenyl und
$R_3$ für Methyl und Phenyl, stehen.

Die Anionen leiten sich von anorganischen oder organischen Säuren ab und sind im allgemeinen durch das Herstellungsverfahren und die evtl. vorgenommene Reinigung des rohen Farbstoffes gegeben. Im allgemeinen liegen die Farbstoffe als Zinkchlorid-Doppelsalze, Acetate, Methosulfate, Äthosulfate oder als Halogenide (insbesondere als Chloride oder Bromide) vor. Die Anionen können in bekannter Weise gegen andere Anionen ausgetauscht werden.

Die als Oxidationsmittel eingesetzten Chinone können sein: Tetrachlor-, Tetrabrom-, Tetrafluor-, Tetracyan-, Dicyandichlor-1,4-benzochinon, Tetrachlor- oder Tetrabrom-1,2-benzochinon, 2-Nitro-, 2,7-Dinitro- oder 4,5-Dinitrophenanthrenchinon. Bevorzugt werden Tetrachlor- oder Tetrabrom-1,4-benzochinon. Man setzt die Chinone in einer Menge von $10^{-3}$ bis $10^{-1}$ Mol bezogen auf die Molmenge der Verbindung III ein. Anstelle der Chinone können auch die entsprechenden Hydrochinone eingesetzt werden.

Geeignete Katalysatoren sind:

Stickstoffoxid oder Stickstoffdioxid oder Substanzen, die unter den Reaktionsbedingungen — vor allen Dingen in sauren Lösungsmitteln — Stickstoffoxide freisetzen, z. B. Eisen-III-nitrat oder Natriumnitrit. Die Katalysatoren werden in Konzentrationen von 1 bis 20 Molprozent, bezogen auf das Substrat, angewandt.

Man führt das neue Verfahren so durch, daß man in einem neutralen oder sauren, wäßrigen oder organischen Lösungsmittel Verbindungen der allgemeinen Formel III bei Temperaturen zwischen 0° C und 150° C, bevorzugt zwischen 20 und 70° C, löst oder suspendiert, $10^{-3}$ bis $10^{-1}$ Mol Chinon, bezogen auf die Molmenge der Verbindung III, zugibt, die Reaktionslösung intensiv mit zugeführten Sauerstoff, normalerweise Reinsauerstoff oder Luft, vermischt und im Verlauf der Reaktion entweder 1 bis 20 Molprozent Nitrate oder Nitrite zugibt oder insgesamt 1 bis 20 Molprozent Stickstoffoxide zudosiert. Die Zudosierung kann entweder mit dem Sauerstoffstrom oder aus einer separaten Dosiervorrichtung erfolgen. Um eine hohe Reaktionsgeschwindigkeit zu erreichen, ist eine intensive Durchmischung von Gas und Flüssigkeit notwendig. Das Arbeiten unter Druck ist auch möglich.

Geeignete Lösungsmittel für die Oxidation sind z. B.:

Methylenchlorid, Chloroform, Tetrachlorkohlenstoff, Chlorbenzol, Dichlorbenzol, Benzol, Toluol, Xylol, Cumol, Essigsäure, Propionsäure, Milchsäure, Dichloräthan, Methanol, Äthanol, Propanol, Isopropanol, Butanol, Glykol, Methylglykol, Dimethylglykol, Tetrahydrofuran, Dioxan, Essigester, Dimethylformamid, N-Methylpyrrolidon, Aceton oder Mischungen davon. Man kann auch in wäßriger Lösung oder Suspension oder in einem Gemisch aus Wasser und mit Wasser mischbaren Lösungsmitteln arbeiten. Der pH-Wert der Reaktionslösung sollte je nach Farbstoff im neutralen bis sauren Bereich liegen. Bevorzugt ist der saure pH-Bereich zwischen pH 1 und pH 4.

Aus den deutschen Offenlegungsschriften 21 52 703 und 23 34 918 ist die Herstellung basischer Farbstoffe durch katalytische Oxidation von Triarylmethan-Derivaten in Gegenwart von durch Fluor, Chlor, Brom, Cyan substituierter Benzochinone oder durch Nitro substituierter Phenanthrenchinone sowie von Schwermetall-Komplexen bekannt.

Aus der deutschen Patentschrift 2 31 992 ist die Herstellung von Farbstoffen der Triphenylmethan-Reihe durch Oxidation von Leukoverbindungen mit Nitrosylschwefelsäure bekannt.

Aus der Lehre dieser Publikationen war das neue Verfahren nicht vorhersehbar. Es war vielmehr überraschend, daß die Verwendung von Stickstoffoxiden als Katalysatoren anstelle der Schwermetall-Komplexe der vorstehend genannten Offenlegungsschriften in ausgezeichneter Ausbeute zu Farbstoffen mit hoher Reinheit führte. Gegenüber der Verwendung der Schwermetall-Komplexe hat die Verwendung der Stickstoffoxide bzw. der Stickstoffoxid freisetzenden Verbindungen den Vorteil, daß sie das Abwasser weniger belastet.

Die folgenden Beispiele veranschaulichen die Erfindung. Die Teile beziehen sich, wenn nicht anders angegeben, auf das Gewicht.

## Beispiel 1

99 Teile Leukomalachitgrün, 6 Teile Chloranil und 600 Teile Eisessig werden bei 30° C intensiv mit Luft behandelt. Im Verlauf der Reaktion — Reaktionsdauer etwa 12 Stdn. — werden gleichmäßig insgesamt 1,2 Teile eines Gemisches aus Stickstoffmonoxid und Stickstoffdioxid — erzeugt durch Behandeln von Natriumnitrit mit Schwefelsäure — zudosiert. Am Ende der Reaktion sind 95% des eingesetzten Leukomalachitgrüns in Malachitgrün umgewandelt worden. Der Farbstoff wird nach Abdampfen des Eisessigs mit Natronlauge behandelt und als Carbinolbase gefällt. Nach Erwärmen der Carbinolbase mit Oxalsäure auf 70° C und Filtration fällt beim Abkühlen sehr saubeřes, kristallines

Malachitgrünoxalat aus. Ähnlich gute Ergebnisse erhält man, wenn man während der Luftoxidation anstelle der Stickstoffoxide gleichmäßig entweder 2,5 Teile Natriumnitrit oder 2,5 Teile Eisen-III-nitrat zusetzt.

Beispiel 2

Ein Gemisch von 109,5 Teilen der Verbindung der Formel

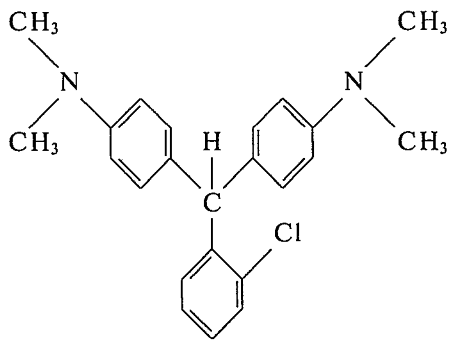

300 Teilen Eisessig, 300 Teilen Chlorbenzol und 6 Teilen Chloranil wird bei 50°C kräftig mit Luft begast. Während der Reaktion werden kontinuierlich insgesamt 1,2 Teile eines Gemisches aus Stickstoffmonoxid und Stickstoffdioxid zudosiert. Nach vollendeter Reaktion wird das Chlorbenzol und ein Teil des Eisessigs im Vakuum abgedampft, der Rückstand in heißem $H_2O$ aufgenommen, mit verdünnter Salzsäure angesäuert, heiß filtriert und mit Natriumchlorid gefällt. Man erhält den Farbstoff in 90%iger Ausbeute. Zu ähnlichen Ergebnissen gelangt man, wenn man als Katalysatoren anstelle der Stickstoffoxide Natriumnitrit oder Eisen-III-nitrat verwendet.

Beispiel 3

Eine Suspension von 31,8 Teilen der Verbindung der Formel

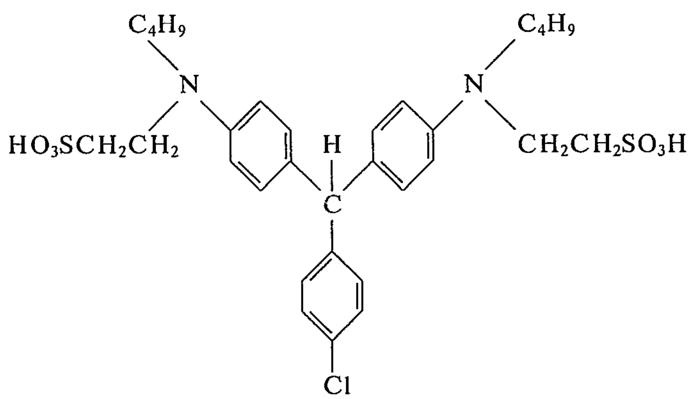

1 Teil Chloranil und 450 Teilen Wasser wird unter starkem Rühren bei 70°C mit Sauerstoff behandelt. Während der Reaktion werden kontinuierlich insgesamt 0,5 Teile eines Gemisches aus Stickstoffmonoxid und Stickstoffdioxid zudosiert. Am Ende der Reaktion sind 88% der eingesetzten Ausgangsverbindung zum Farbstoff oxidiert. Der Farbstoff kann durch Behandeln der Reaktionslösung mit Natriumchlorid isoliert werden. Ähnliche Ergebnisse erhält man, wenn man anstelle der Stickstoffoxide Natriumnitrit oder Eisen-III-nitrat als Katalysatoren einsetzt.

Beispiel 4

107 Teile Leukodiamantgrün und 6 Teile Chloranil werden in 60 Teilen Eisessig und 500 Teilen Chloroform gelöst. Diese Lösung wird bei 30°C intensiv mit Luft begast. Im Verlauf der Reaktion werden insgesamt 1,2 Teile eines Gemisches aus Stickstoffmonoxid und Stickstoffdioxid zudosiert. Nach beendeter Reaktion enthält die Reaktionslösung Diamantgrün in 92%iger Ausbeute.

Beispiel 5

118 Teile der Verbindung der Formel

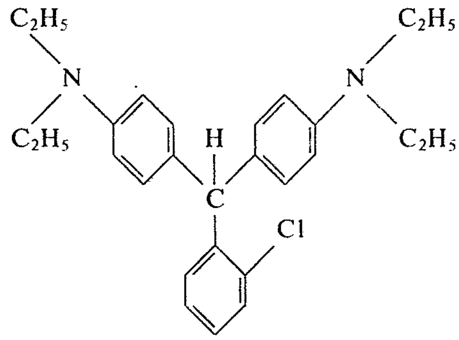

und 6 Teile Chloranil werden in 60 Teilen Eisessig und 500 Teilen Chloroform gelöst. Bei 50° C wird in diese Lösung unter intensivem Rühren Luft eingeleitet. Gleichzeitig werden mit dem Luftstrom insgesamt 1,2 Teile eines Gemisches aus Stickstoffmonoxid und Stickstoffdioxid zudosiert. Nach beendeter Reaktion wird im Vakuum das Chloroform eingedampft, der Rückstand mit warmem Wasser aufgenommen, filtriert und mit Natriumchloridlösung ausgesalzen. Man erhält den Farbstoff in 87%ig. Ausbeute.

Nach dem erfindungsgemäßen Verfahren lassen sich die folgenden Leukoverbindungen ebenfalls in guter Ausbeute oxidieren.

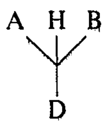

| Beispiel | A | B | D |
| --- | --- | --- | --- |
| 6 | 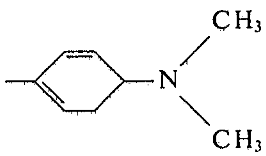 | 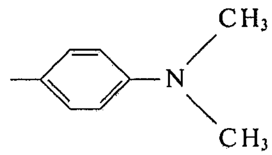 | 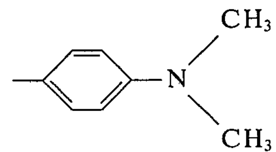 |
| 7 | desgl. | desgl. | 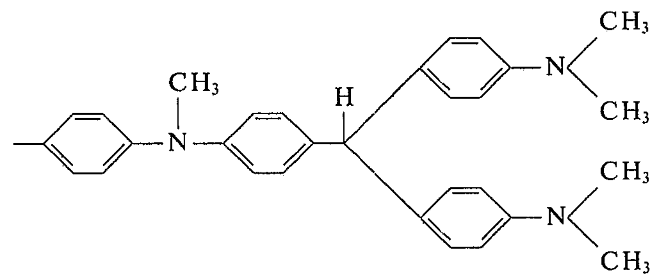 |
| 8 | desgl. | desgl. | 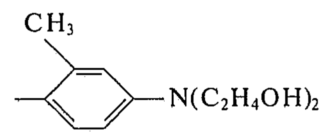 |
| 9 | desgl. | desgl. | 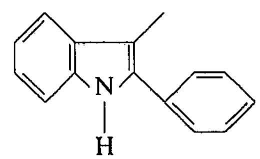 |
| 10 | desgl. | desgl. | 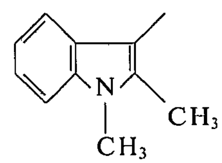 |

Fortsetzung

| Beispiel | A | B | D |
| --- | --- | --- | --- |
| 11 | 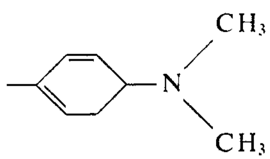 | 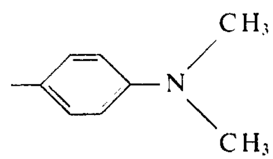 | 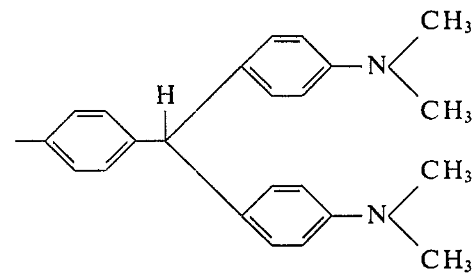 |
| 12 | 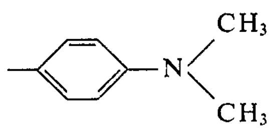 | desgl. | 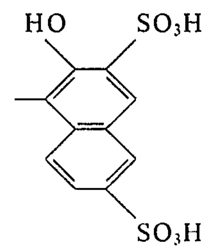 |
| 13 | desgl. | desgl. | 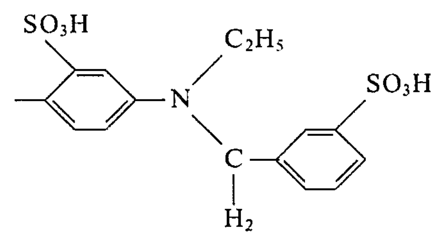 |
| 14 | desgl. | desgl. | 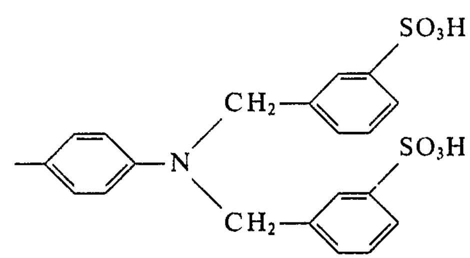 |

Fortsetzung

| Beispiel | A | B | D |
|---|---|---|---|
| 15 | 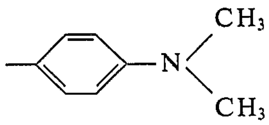 | 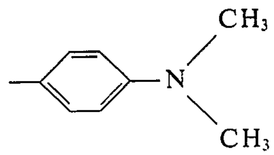 | 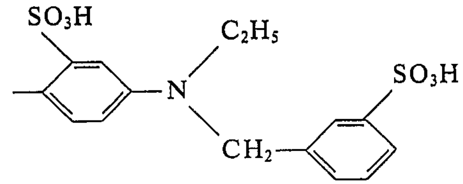 |
| 16 | 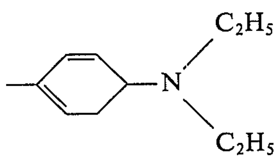 | 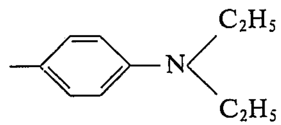 | 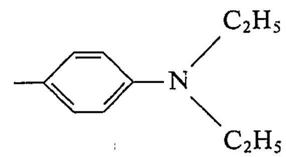 |
| 17 | desgl. | desgl. | 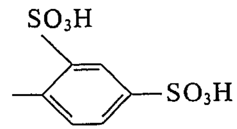 |
| 18 | desgl. | desgl. | 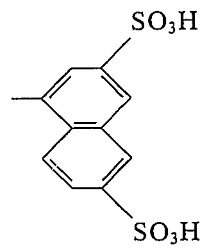 |
| 19 | 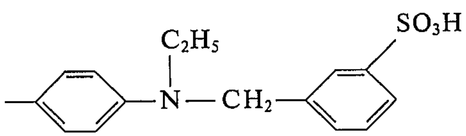 | 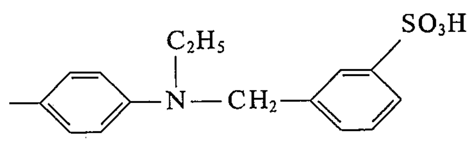 | 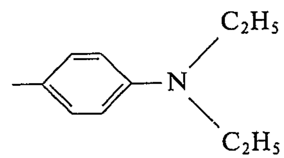 |
| 20 | desgl. | desgl. | 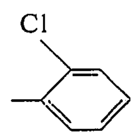 |

Fortsetzung

| Beispiel | A | B | D |
|---|---|---|---|
| 21 | 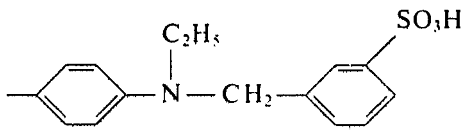 | 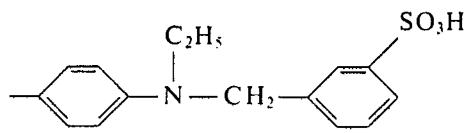 | 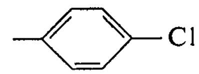 |
| 22 | desgl. | desgl. | 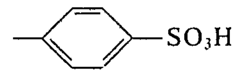 |
| 23 | desgl. | desgl. | 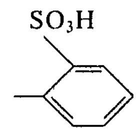 |
| 24 | desgl. | desgl. | 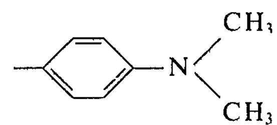 |
| 25 | desgl. | desgl. | 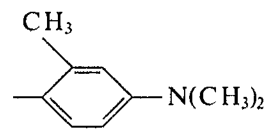 |
| 26 | desgl. | desgl. | 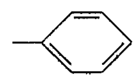 |
| 27 | 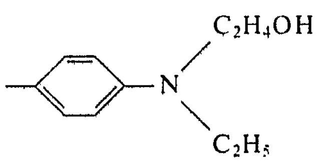 | 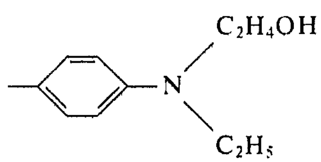 | 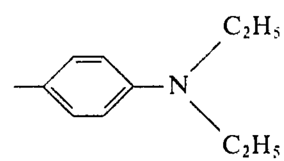 |
| 28 | 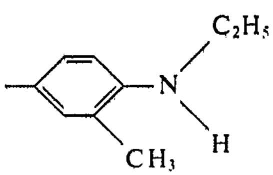 | 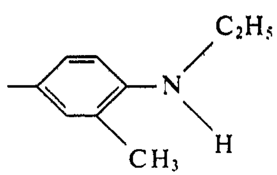 | 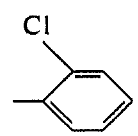 |

Fortsetzung

| Beispiel | A | B | D |
|---|---|---|---|
| 29 | 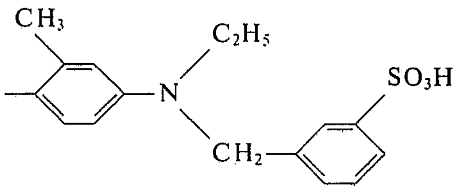 | 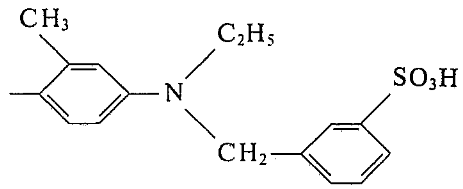 | 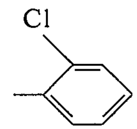 |
| 30 | desgl. | desgl. | 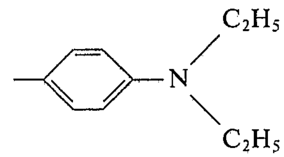 |
| 31 | 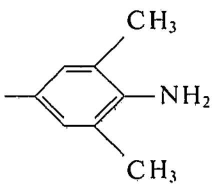 | 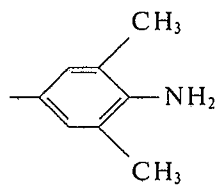 | 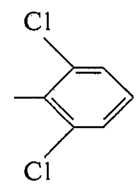 |
| 32 | 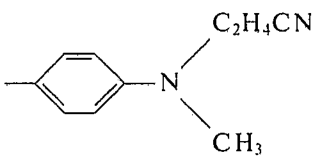 | 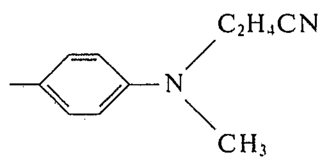 | 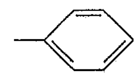 |
| 33 | desgl. | desgl. | 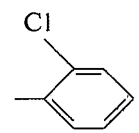 |
| 34 | 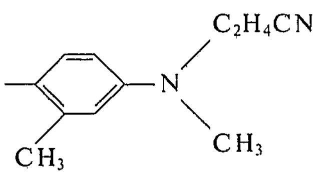 | 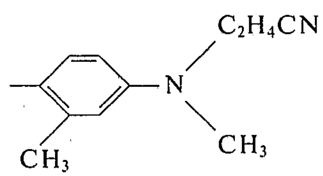 | 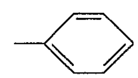 |

**Patentansprüche**

1. Verfahren zur Herstellung basischer Farbstoffe der allgemeinen Formel

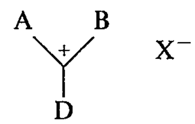

in der

A und B unabhängig voneinander für einen heteroaromatischen Rest oder einen Rest der allgemeinen Formel

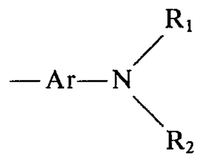

stehen, in der

Ar die Gruppierungen

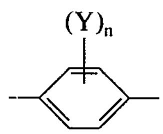

oder

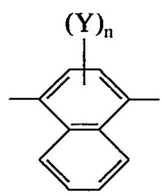

in denen

Y für Wasserstoff oder nichtionische Substituenten und
n für die Zahlen 1 bis 4 stehen, bedeutet und
$R_1$ und $R_2$ für Wasserstoff oder gegebenenfalls durch nichtionische oder saure Gruppen substituiertes Alkyl, Aryl, Cyclohexyl oder Aralkyl stehen oder zusammen oder mit der o-Position von Ar einen heterocyclischen Ring bilden, der durch $C_1-C_4$-Alkyl oder Phenyl substituiert sein kann,
D Wasserstoff, Alkyl, gegebenenfalls mit neutralen oder sauren Gruppen substituiertes Aryl oder einen heteroaromatischen Rest bedeutet und
$X^-$ für ein Anion steht,

dadurch gekennzeichnet, daß man Verbindungen der allgemeinen Formel

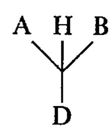

in der

A, B und D die oben genannte Bedeutung haben,

mit Sauerstoff in Gegenwart katalytischer Mengen von durch Halogen oder Cyan substituierten Benzochinonen oder durch Nitro substituierten Phenanthrenchinonen und in Gegenwart katalytischer Mengen von Stickstoffoxiden — ausgenommen Distickstoffmonoxid — oder von Substanzen, die unter den Reaktionsbedingungen solche Stickstoffoxide erzeugen, oxidiert.

2. Verfahren gemäß Anspruch 1, dadurch gekennzeichnet, daß man Verbindungen der allgemeinen Formel

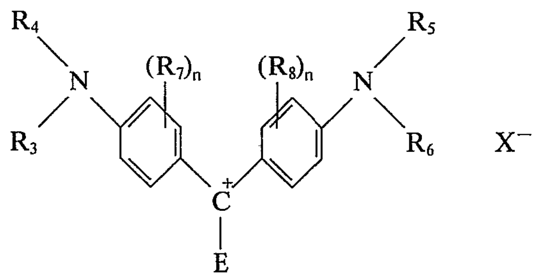

in der unabhängig voneinander

| | |
|---|---|
| $R_3$ und $R_5$ | Wasserstoff $C_1$- bis $C_4$-Alkyl, Hydroxyalkyl mit zwei und drei C-Atomen, Cyanäthyl, Alkoxyalkyl mit insgesamt drei bis fünf C-Atomen, Alkoxycarbonylalkyl mit insgesamt drei bis acht C-Atomen, Alkylcarbonyloxyalkyl mit insgesamt drei bis acht C-Atomen, $C_1$- bis $C_4$-Halogenalkyl, Sulfoalkyl mit zwei bis vier C-Atomen, Cyclohexyl, Benzyl, Phenyl, Phenäthyl, durch Halogen, $C_1$- bis $C_4$-Alkyl oder -Alkoxy substituiertes Phenyl oder Sulfobenzyl, |
| $R_4$ und $R_6$ | $C_1$- bis $C_4$-Alkyl, Hydroxyalkyl mit zwei oder drei C-Atomen, Cyanäthyl, $C_1$- bis $C_4$-Halogenalkyl, Alkoxyalkyl mit insgesamt drei bis fünf C-Atomen, Alkoxycarbonylalkyl mit insgesamt drei bis acht C-Atomen, Alkylcarbonyloxyalkyl mit insgesamt drei bis acht C-Atomen oder Benzyl |

bedeuten, oder

| | |
|---|---|
| $R_3$ und $R_4$ und/oder $R_5$ und $R_6$ | zusammen einen gegebenenfalls durch $C_1-C_4$-Alkyl substituierten Pyrrolidin-, Piperidin-, Morpholin- oder Piperazin-Ring oder |
| $R_3$, $R_4$, $R_5$ und/oder $R_6$ | mit der o-Position des Phenylringes verbunden sind und dann mit dem Phenylring zusammen einen gegebenenfalls durch $C_1-C_4$-Alkyl, Phenyl oder Benzyl substituierten Tetrahydrochinolin-, Indolin-, Julolidin-, Phenmorpholin-, Tetrahydrochinoxalin- oder Carbazol-Ring bilden, |
| $R_7$ und $R_8$ | für Wasserstoff, $C_1$- bis $C_4$-Alkyl, $C_1$- bis $C_4$-Alkoxy, Carbonsäure oder Halogen stehen, |
| n | eine ganze Zahl zwischen 1 und 4 bedeutet und |
| E | Phenyl, durch Halogen, $C_1$- bis $C_4$-Alkyl, $C_1$- bis $C_4$-Alkoxy, Nitro, die Carboxyl- oder Sulfonsäuregruppe mono- oder disubstituiertes Phenyl oder Naphthyl, einen heterocyclischen Rest der allgemeinen Formel V |

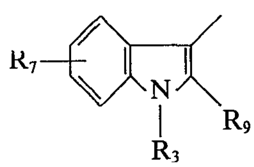 V

in der

| | |
|---|---|
| $R_9$ | H, $C_1-C_4$-Alkyl, Phenyl, Carbonsäure-$C_1$- oder $C_2$-alkylester, gegebenenfalls durch $C_1-C_4$-Alkyl N-substituiertes Carbonsäureamid oder $C_1-C_4$-Alkoxy |

bedeuten,

einen Rest der allgemeinen Formeln

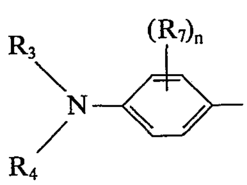 und 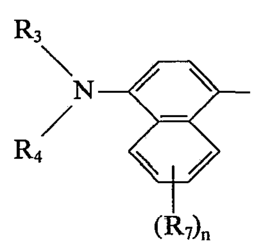

in denen

n, $R_3$, $R_4$ und $R_7$ die oben genannte Bedeutung haben,

oder einen Rest der allgemeinen Formeln

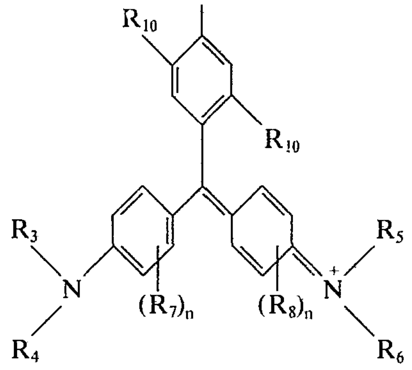

und

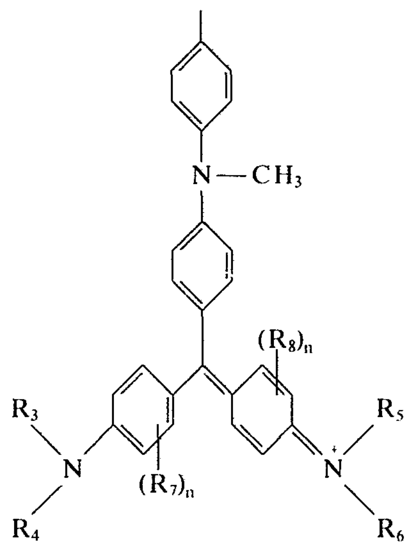

in denen

$R_{10}$ Wasserstoff, $C_1-C_4$-Alkyl oder Halogen, insbesondere Chlor oder Brom, und
n, $R_3$, $R_4$, $R_5$, $R_6$, $R_7$, $R_8$ und X die obengenannte Bedeutung haben,

durch Oxidation von Verbindungen der allgemeinen Formel

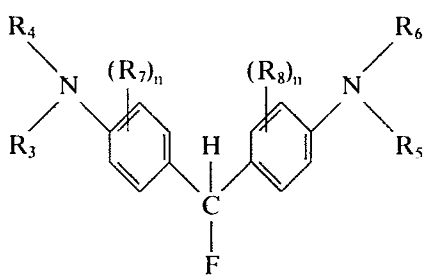

in der

n und $R_3$ bis $R_8$ die oben genannte Bedeutung haben und
F gleich E ist oder ein Rest der allgemeinen Formeln

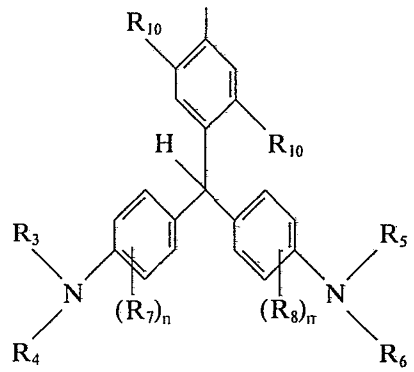

und

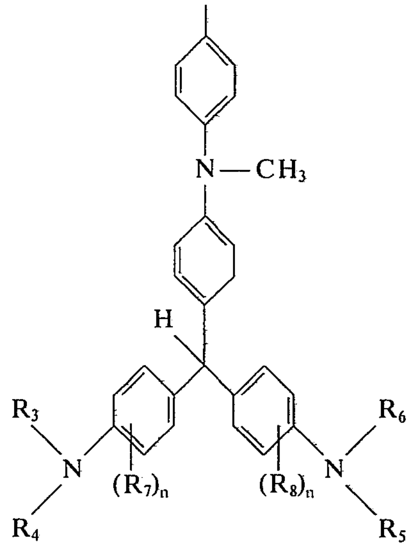

in denen

n, $R_3$ bis $R_8$ und $R_{10}$ die oben genannte Bedeutung haben,

mit Sauerstoff in Gegenwart katalytischer Mengen von Stickstoffmonoxid, Stickstoffdioxid, Natriumnitrit oder Eisen-III-nitrat darstellt.

3. Verfahren gemäß Anspruch 1, dadurch gekennzeichnet, daß man Verbindungen der Formel des Anspruchs 2, worin

| | |
|---|---|
| $R_3$ und $R_5$ | für Wasserstoff, Methyl, Äthyl, Oxäthyl, Propyl, Cyanäthyl oder Butyl, |
| $R_4$ und $R_6$ | für Methyl, Äthyl, Sulfobenzyl oder Sulfoäthyl, |
| $R_7$ und $R_8$ | für Wasserstoff, Methyl, Methoxy und Chlor, |
| E | für Phenyl, durch Chlor, Methoxy oder die Sulfonsäuregruppe substituiertes Phenyl, p-Dimethylaminophenyl, p-Diäthylaminophenyl, p-Bisoxäthylaminophenyl oder den Rest der allgemeinen Formel |

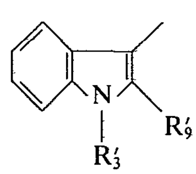

mit

| | |
|---|---|
| $R_3'$ | für Wasserstoff, Methyl oder Phenyl und |
| $R_9'$ | für Methyl oder Phenyl stehen, und |
| n und X | die Bedeutung des Anspruchs 2 haben, |

durch Oxidation entsprechender Triarylmethanderivate mit Sauerstoff in Gegenwart katalytischer Mengen Tetrachlor- oder Tetrabrom-1,4-benzochinon und katalytischer Mengen Stickstoffmonoxid und/oder Stickstoffdioxid herstellt.

## Claims

1. Process for the preparation of basic dyestuffs of the general formula

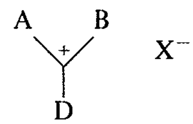

in which

A and B independently of one another represent a hetero-aromatic radical or a radical of the general formula

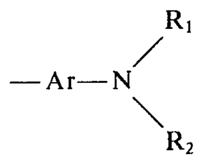

in which

Ar denotes the groupings

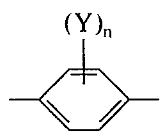

or

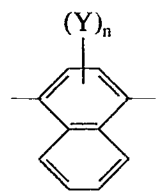

in which

| | |
|---|---|
| Y | represents hydrogen or non-ionic substituents and |
| n | represents a number between 1 and 4, and |
| $R_1$ and $R_2$ | represent hydrogen or alkyl which is optionally substituted by non-ionic or acid groups, aryl, cyclohexyl or aralkyl or together, or with the o-position of Ar, form a heterocyclic ring which can be substituted by $C_1-C_4$ alkyl or phenyl, |
| D | denotes hydrogen, alkyl, aryl which is optionally substituted by neutral or acid groups, or a heteroaromatic radical and |
| $X^-$ | represents an anion, |

characterised in that compounds of the general formula

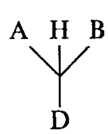

in which

A, B and D  have the abovementioned meaning,

are oxidised with oxygen in the presence of catalytic amounts of benzoquinones which are substituted by halogen or cyano or of phenanthrenequinones which are substituted by nitro, an in the presence of catalytic amounts of nitrogen oxides, with the exception of dinitrogen monoxide, or of substances which produce such nitrogen oxides under the reaction conditions.

2. Process according to Claim 1, chracterised in that compounds of the general formula

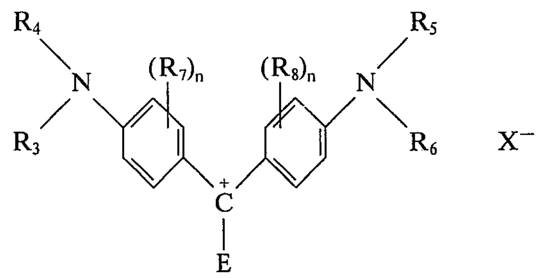

in which, independently of one another,

$R_3$ and $R_5$ denote hydrogen, $C_1$- to $C_4$-alkyl, hydroxyalkyl with two or three C atoms, cyanoethyl, alkoxyalkyl with a total of three to five C atoms, alkoxycarbonylalkyl with a total of three to eight C atoms, alkylcarbonyloxyalkyl with a total of three to eight C atoms, $C_1$- to $C_4$-halogenoalkyl, sulphoalkyl with two to four C atoms, cyclohexyl, benzyl, phenyl, phenethyl, phenyl which is substituted by halogen or $C_1$- to $C_4$-alkyl or -alkoxy, or sulphobenzyl,

$R_4$ and $R_6$ denote $C_1$- to $C_4$-alkyl, hydroxyalkyl with two or three C atoms, cyanoethyl, $C_1$- to $C_4$-halogenoalkyl, alkoxyalkyl with a total of three to five C atoms, alkoxycarbonylalkyl with a total of three to eight C atoms, alkylcarbonyloxyalkyl with a total of three to eight C atoms or benzyl or

$R^3$ and $R_4$ and/or $R_5$ and $R_6$ together form a pyrrolidine, piperidine, morpholine or piperazine ring which is optionally substituted by $C_1-C_4$-alkyl, or

$R_3$, $R_4$, $R_5$ and/or $R_6$ are linked to the o-position of the phenyl ring and then with the phenyl ring together form a tetrahydroquinoline, indoline, julolidine, phenomorpholine, tetrahydroquinoxaline or carbazole ring which is optionally substituted by $C_1-C_4$-alkyl, phenyl or benzyl,

$R_7$ and $R_8$ represent hydrogen, $C_1$- to $C_4$-alkyl, $C_1$- to $C_4$-alkoxy, carboxylic acid or halogen,

n denotes an integer between 1 and 4 and

E denotes phenyl, phenyl or naphthyl which is mono-substituted or disubstituted by halogen, $C_1$- to $C_4$-alkyl, $C_1$- to $C_4$-alkoxy, nitro, the carboxyl group or the sulphonic acid group, a heterocyclic radical of the general formula V

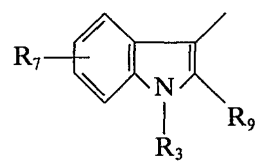

V

in which

$R_9$ denotes H, $C_1-C_4$-alkyl, phenyl, carboxylic acid $C_1$- or $C_2$-alkyl ester, carboxylic acid amide which is optionally N-substituted by $C_1-C_4$-alkyl, or $C_1-C_4$-alkoxy, or

E denotes a radical of the general formulae

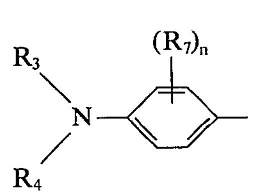

and

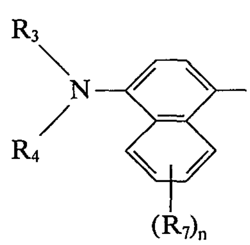

in which

n, $R_3$, $R_4$ and $R_7$ have the abovementioned meaning, or
E denotes a radical of the general formulae

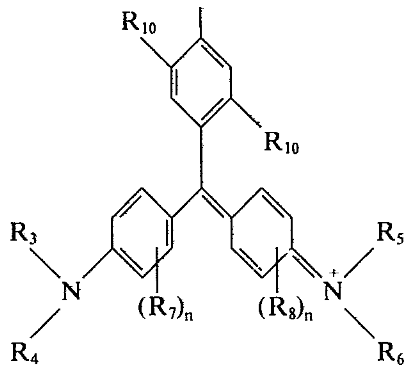

and

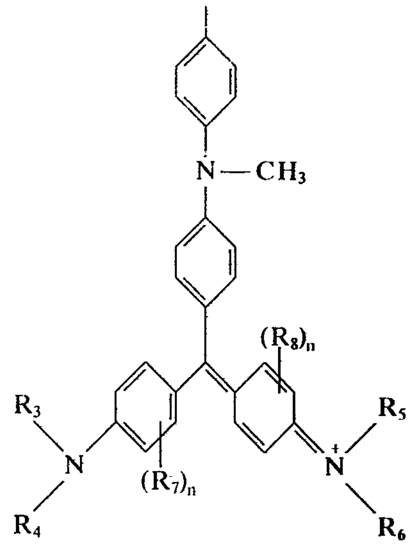

in which

$R_{10}$ denotes hydrogen, $C_1$—$C_4$-alkyl or halogen, in particular chlorine or bromine, and
n, $R_3$, $R_4$, $R_5$, $R_6$, $R_7$, $R_8$ und $X^-$ have the abovementioned meaning,

are prepared by oxidising compounds of the general formula

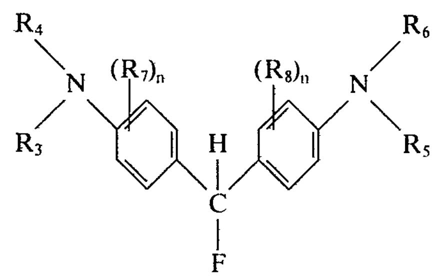

in which

n and $R_3$ to $R_8$ hav the abovementioned meaning and

F Fis the same as E or is a radical of the general formulae

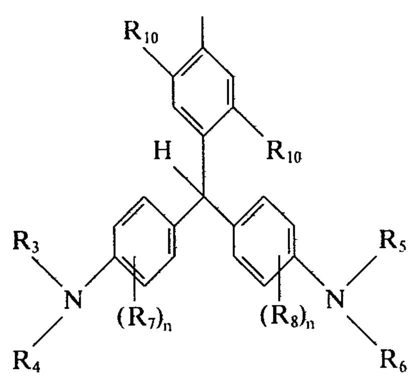

and

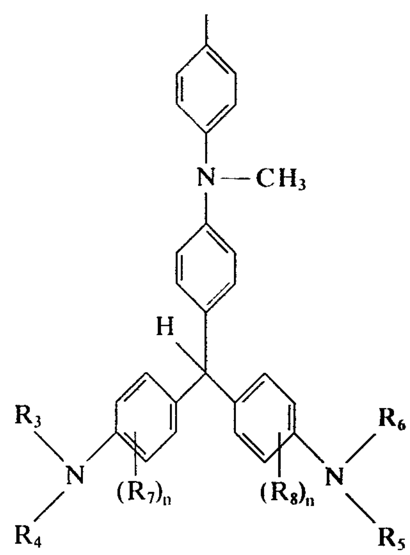

in which

n, $R_3$ to $R_8$ and $R_{10}$ have the abovementioned meaning,

with oxygen in the presence of catalytic amounts of nitrogen monoxide, nitrogen dioxide, sodium nitrite or iron-III nitrate.

3. Process according to Claim 1, chracterised in that compounds of the formula in Claim 2, wherein

| | |
|---|---|
| $R_3$ and $R_5$ | represent hydrogen, methyl, ethyl, hydroxyethyl, propyl, cyanoethyl or butyl, |
| $R_4$ and $R_6$ | represent methyl, ethyl, sulphobenzyl or sulphoethyl, |
| $R_7$ and $R_8$ | represent hydrogen, methyl, methoxy and chlorine, |
| E | represents phenyl, phenyl which is substituted by chlorine, methoxy or the sulphonic acid group, p-dimethylaminophenyl, p-diethylaminophenyl, p-bis-hydroxyethylaminophenyl or the radical of the general formula |

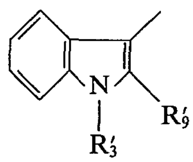

in which

| | |
|---|---|
| $R'_3$ | represents hydrogen, methyl or phenyl and |
| $R'_9$ | represents methyl or phenyl, and |
| n and X | have the meanings given in Claim 2, |

are prepared by oxidising corresponding triarylmethane derivatives with oxygen in the presence of catalytic amounts of tetrachloro- or tetrabromo-1,4-benzoquinone and catalytic amounts of nitrogen monoxide and/or nitrogen dioxide.

## Revendications

1. Procédé de fabrication de colorants basiques de formule générale:

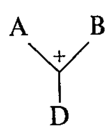 $X^-$

dans laquelle

A et B représentent indépendamment l'un de l'autre un radical hétéroaromatique ou un radical de formule générale:

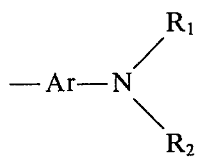

dans laquelle

Ar représente les groupements

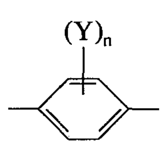 ou , 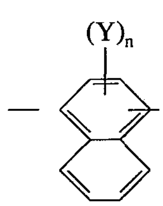

dans lesquels

Y représente de l'hydrogène ou des substituants non ioniques et

n les nombres 1 à 4, et

$R_1$ et $R_2$ de l'hydrogène ou un alcoyle, aryle, cyclohexyle ou aralcoyle éventuellement substitué par des groupes non ioniques ou acides, ou forment ensemble avec la position ortho de Ar un noyau hétérocyclique qui peut être substitué par un alcoyle en $C_1-C_4$ ou phényle,

D de l'hydrogène, un alcoyle, un aryle éventuellement substitué par des groupes neutres ou acides ou un radical hétéroaromatique et

X représente un anion,

caractérisé en ce qu'on oxyde des composés de formule générale:

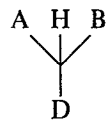

dans laquelle

A, B et D ont la signification indiquée plus haut,

avec de l'oxygène en présence de quantités catalytiques de benzoquinones substituées par de l'halogène ou cyano ou de phénanthrène-quinones nitro-substituées et en présence de quantités catalytiques d'oxyde d'azote — sauf $N_2O$ — our de subtances qui dans les conditions de la réaction engendrent ces oxydes d'azote.

2. Procédé selon la revendication 1, caractérisé en ce qu'on prépare des composés de formule générale

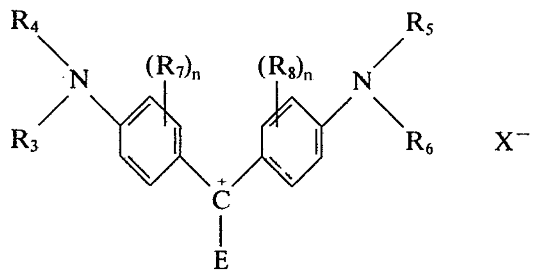

dans laquelle, indépendemment l'un de l'autre

$R_3$ et $R_5$ représentent de l'hydrogène, un alcoyle en $C_1-C_4$, hydroxyalcoyle ayant deux et trois atomes de carbone, cyanoéthyle, alcoxyalcoyle ayant en tout trois à cinq atomes de carbone, alcoxy-carbonylalcoyle ayant en tout trois à huit atomes de carbone, alcoylcarbonyloxyalcoyle avec en tout trois à huit atomes de carbone, haloalcoyle en $C_1-C_4$, sulfoalcoyle ayant deux à quatre atomes de carbone, cyclohexyle, benzyle, phényle, phénéthyle, phényle substitué par de l'halogène, un alcoyle ou alcoxy en $C_1-C_4$, ou sulfobenzyle,

$R_4$ et $R_6$ un alcoyle en $C_1-C_4$, hydroxyalcoyle ayant deux ou trois atomes de carbone, cyanoéthyle, haloalcoyle en $C_1-C_4$, alcoxyalcoyle avec en tout trois à cinq atomes de carbone alcoxy-carbonylalcoyle avec an tout trois à huit atomes de carbone, alcoylcarbonyloxyalcoyle avec en tout trois à huit atomes de carbone ou benzyle,

ou

$R_3$ et $R_4$ et/ou $R_5$ et $R_6$ forment ensemble un noyau pyrrolidine, pipéridine, morpholine ou pipérazine éventuellement substitué par un alcoyle en $C_1-C_4$ ou

$R_3$, $R_4$, $R_5$ et/ou $R_6$ sont reliés à la position ortho du noyau phényle et forment alors avec le noyau phényle ensemble un noyau tétrahydroquinoléine, indoline, julolidine, phène-morpholine, tétra-hydroquinoxaline ou carbazol éventuellement substitué par un alcoyle en $C_1-C_4$, phényle ou benzyle,

$R_7$ et $R_8$ représentent de l'hydrogène, alcoyle en $C_1-C_4$, alcoxy en $C_1-C_4$, acide carboxylique ou halogène,

n un nombre entier de 1 à 4 et

E un phényle, un phényle ou naphtyle mono- ou disubstitué par de l'halogène, un alcoyle en $C_1-C_4$, alcoxy en $C_1-C_4$, nitro, le groupe carboxyle ou acide sulfonique, un radical hétérocyclique de formule générale V

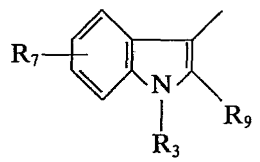

V

$R_9$ H, alcoyle en $C_1-C_4$, phényle, ester carboxylique d'alcoyle en $C_1$ ou $C_2$, carboxyamide éventuellement N-substituée par un alcoyle en $C_1-C_4$ ou un alcoxy en $C_1-C_4$,

un radical de formules générales

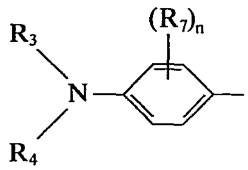

et

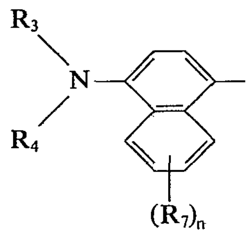

dans lesquelles

n, $R_3$, $R_4$ et $R_7$ ont la signification indiquée plus haut,

ou un radical de formules générales

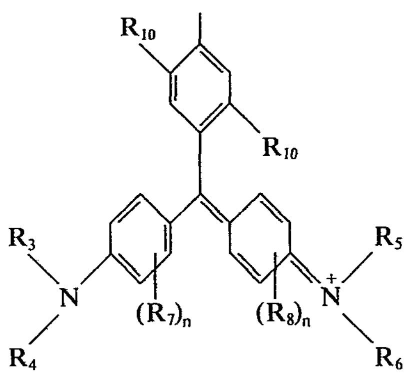

et

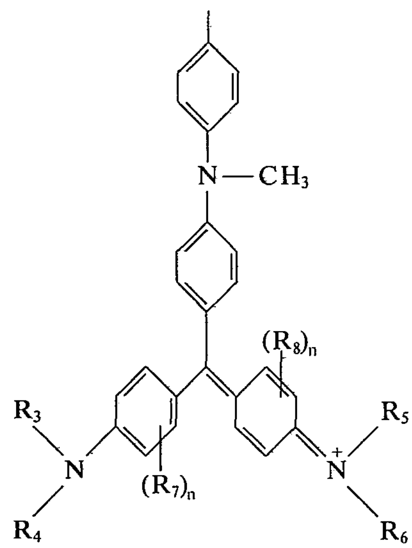

dans lesquelles

$R_{10}$ représente de l'hydrogène, un alcoyle en $C_1-C_4$ ou de l'halogène, en particulier du chlore ou du brome et

n, $R_3$, $R_4$, $R_5$, $R_6$, $R_7$, $R_8$ et $X^-$ ont la signification indiquées plus haut,

par oxydation de composés de formule générale:

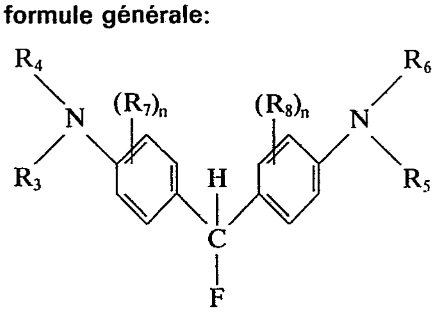

dans lequelle

n et $R_3$ à $R_8$ ont la signification indiquée plus haut et

F est équivalent à E ou représente un radical de formules générales:

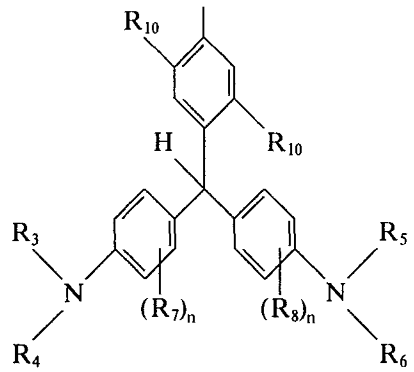

et

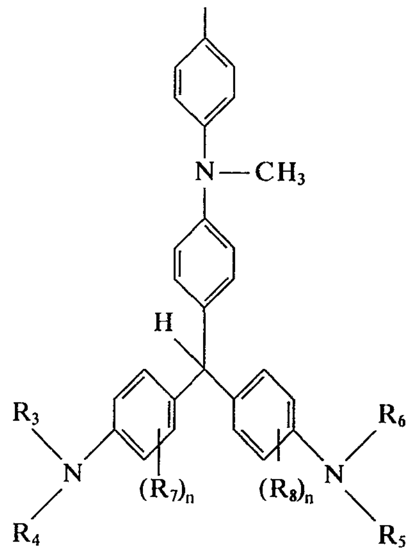

dans lesquelles

n, $R_3$ à $R_8$ et $R_{10}$ ont la signification indiquée plus haut,

avec de l'oxygène en présence de quantités catalytiques de monoxyde d'azote, de dioxyde d'azote, de nitrite de sodium ou de nitrate de fer-III.

3. Procédé selon la revendication 1, caractérisé en ce qu'on prépare des composés de formule selon la revendication 2 dans laquelle

| | |
|---|---|
| $R_3$ et $R_5$ | représentent de l'hydrogène, méthyle, éthyle, oxyéthyle, propyle, cyanoéthyle ou butyle, |
| $R_4$ et $R_6$ | un méthyle, éthyle, sulfobenzyle ou sulfoéthyle, |
| $R_7$ et $R_8$ | de l'hydrogène, un méthyle, un méthoxy ou du chlore, |
| E | un phényle, un phényle substitué par du chlore, méthoxy ou le groupe acide sulfonique, p-diméthylaminophényle, p-diéthylaminophényle, p-bis-oxyéthylaminophényle ou le radical de formule générale: |

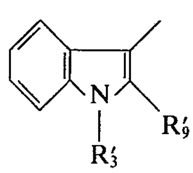

avec

| | |
|---|---|
| $R_3'$ | représentant de l'hydrogène, un méthyle ou phényle et |
| $R_9'$ | un méthyle ou phényle et |
| n et $X^-$ | ont la signification indiquée à la revendication 2, |

par oxydation des dérivés correspondants de triarylméthane avec de l'oxygène en présence de quantités catalytiques de tétrachloro- ou tétrabromo-1,4-benzoquinone et de quantités catalytiques de monoxyde d'azote et/ou de dioxyde d'azote.